# FASCICULE DE BREVET EUROPEEN

(11) **EP 3 026 555 B1**
(45) Date de publication et mention de la délivrance du brevet: **21.02.2024**
(21) Numéro de dépôt: 15196020.0
(22) Date de dépôt: 24.11.2015
(51) Int. Cl.: G06F 9/50, G06F 9/455, G06F 21/53

(54) **PROCÉDÉ DE GESTION D'UNE ARCHITECTURE ET ARCHITECTURE ASSOCIÉE**
VERWALTUNGSVERFAHREN EINER ARCHITEKTUR, UND ENTSPRECHENDE ARCHITEKTUR
METHOD FOR MANAGING AN ARCHITECTURE AND ASSOCIATED ARCHITECTURE

(30) Priorité: 27.11.2014 FR 1402700
(43) Date de publication de la demande: 01.06.2016
(73) Titulaire: THALES, 92400 Courbevoie (FR)
(72) Inventeur: SALIBA, Eric, 92622 GENNEVILLIERS (FR); GUREGHIAN, Emmanuel, 92622 GENNEVILLIERS (FR); NORTIER, Cédric, 92622 GENNEVILLIERS (FR)
(74) Mandataire: Lavoix

(56) Documents cités:
- EP-A1- 2 677 425
- EP-A2- 1 906 333
- WO-A1-2006/103687

## Description

La présente invention concerne un procédé de gestion d'une architecture. La présente invention est également relative à l'architecture associée.

Le domaine d'application de l'invention correspond à des systèmes reconfigurables exécutant des traitements de différents niveaux de sensibilité différents et devant cloisonner lesdits traitements.

Le document WO 2006/103687 A1 décrit un système de réaffectation de ressources.

Le document EP 1 906 333 décrit une architecture informatique partitionnée avec un canal sécurisé de type "Inter Partition Bridge".

Il est notamment connu des produits intégrant des fonctions de sécurité et cryptographiques. Les fonctions d'un agent de configuration de services sont un exemple de fonctions de sécurité alors que le chiffrement, la génération de nombres aléatoires ou pseudo-aléatoires et la gestion de biens sensibles sont des exemples de fonctions cryptographiques.

Les mécanismes de sécurité utilisés font généralement l'objet d'évaluation de sécurité. Pour leur part, les produits précités visent des agréments ou des certifications. De tels produits s'intègrent donc dans des architectures de sécurité reconfigurables.

La mise en oeuvre de cloisonnement dans des produits visant des niveaux élevés de sécurité se heurte aux limites des solutions logicielles et implique l'utilisation de propriétés matérielles.

Cela passe par la définition d'architecture combinant des fonctionnalités logicielles s'appuyant sur des mécanismes offerts par le matériel exécutant le logiciel et des fonctionnalités matérielles maitrisées.

Ainsi, il existe un besoin pour un procédé de gestion d'une architecture permettant à la fois de garantir l'obtention de la flexibilité offerte par un logiciel et la robustesse offerte par le matériel dans le domaine du cloisonnement.

Pour cela, il est proposé un procédé de gestion d'une architecture selon la revendication 1.

Suivant des modes de réalisation particuliers, le procédé est selon l'une quelconque des revendications 2 à 7.

En outre, l'invention se rapporte aussi à une architecture selon la revendication 8.

Suivant un mode de réalisation particulier, l'architecture est selon la revendication 9.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un exemple d'architecture, et
- figure 2, un ordinogramme d'un exemple de mise en oeuvre d'un procédé de gestion.

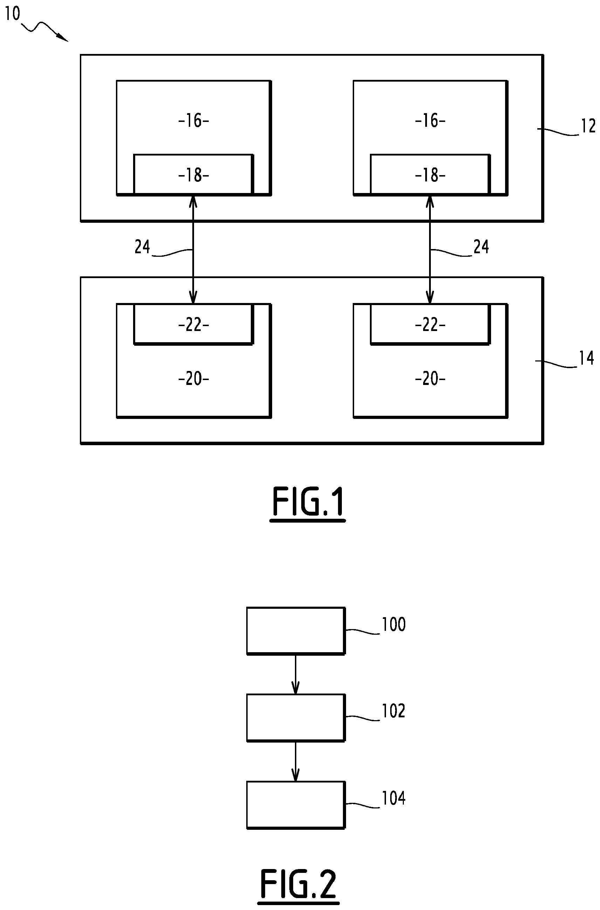

Une architecture 10 est illustrée à la figure 1.

L'architecture 10 comporte une plate-forme principale 12 et une plate-forme secondaire 14.

En variante, l'architecture 10 comporte une pluralité de plates-formes secondaires 14.

La plate-forme principale 12 fournit les services fonctionnels pour le compte d'un ou de plusieurs systèmes 'utilisateur' et est la plate-forme maîtresse de l'architecture 10.

La plate-forme principale 12 est propre à réaliser un mécanisme de programmation (et reprogrammation) intègre et authentique, un mécanisme de démarrage intègre et authentique, un mécanisme de cloisonnement des traitements que la plateforme principale 12 exécute et un mécanisme de communication vers la plate-forme secondaire 14.

La plate-forme principale 12 est propre à exécuter en partie des logiques interprétées (c'est à dire que son fonctionnement est particularisé sous la forme de programmes informatiques). Ces programmes s'exécutent sur des ressources plates-formes comportant un ou plusieurs processeurs GPP (acronyme anglais de « General Purpose Processor ») intégrant eux-mêmes un ou plusieurs coeurs ou un Soc (acronyme anglais de « System On Chip ») intégrant un ou plusieurs coeurs associés à des fonctionnalités natives : périphériques, ports, GPU...

Certaines fonctions et certaines ressources assurent des traitements de sécurité pour le compte de la plate-forme principale 12 et s'appuient sur des ressources spécifiques comme des accélérateurs cryptographiques.

La plate-forme principale 12 est une plate-forme logicielle.

A titre d'exemple, la plate-forme principale 12 est un microprocesseur programmable.

La plate-forme principale 12 comporte une pluralité de partitions 16 d'exécution de logiciel.

Selon un mode de réalisation, Chaque partition 16 est propre à fonctionner simultanément avec les autres partitions 16.

Selon un autre mode de réalisation, chaque partition 16 est propre à fonctionner de façon indépendante sous le contrôle d'un mécanisme de cloisonnement intra-plateforme.

Un hyperviseur est un exemple de mécanisme de cloisonnement intra-plateforme.

En outre, chaque partition 16 est propre à fonctionner conformément à un première politique, la première politique gérant le cloisonnement entre les partitions 16.

Selon un mode de réalisation particulier, chaque partition 16 est propre à mettre en oeuvre une interface homme-machine permettant à un utilisateur d'accéder à un service.

Dans le cas particulier de la figure 1, chaque partition 16 comporte un premier élément d'émission/réception 18.

Généralement, dans le contexte informatique, le premier élément d'émission/réception 18 est désigné sous le terme anglais de « handler ».

La plate-forme secondaire 14 est propre à fournir des services additionnels (aux services exécutés par la plate-forme principale 12.

La plate-forme secondaire 14 est propre à mettre en oeuvre un mécanisme de programmation (et reprogrammation) intègre et authentique, un mécanisme de démarrage intègre et authentique, un mécanisme de cloisonnement des traitements que la plateforme secondaire 14 exécute et un mécanisme de communication vers la plateforme principale 12.

La plate-forme principale 12 est une plate-forme matérielle.

Selon un exemple particulier, la plate-forme secondaire 14 est un circuit logique programmable.

A titre d'illustration, la plate-forme principale 12 implémente de la logique câblée (ASIC) ou pseudo-câblée (FPGA) permettant la réalisation de traitements spécifiques (typiquement moteurs cryptographiques) dont l'exécution peut être garantie et confinée.

Chaque plate-forme secondaire 14 comprend une pluralité d'organes de traitement 20.

Chaque organe de traitement 20 étant propre à mettre en oeuvre des traitements sécurisés pour le compte d'au moins une partition 16.

Plus précisément, chaque organe de traitement 20 est propre à mettre en oeuvre des mécanismes de sécurité pour le compte des applications s'exécutant sur la plateforme principale 12.

En outre, chaque organe de traitement 20 est cloisonné physiquement par rapport aux autres organes de traitement 20.

Un tel cloisonnement physique est conforme à une deuxième politique, la deuxième politique gérant le cloisonnement entre les organes de traitement 20.

Chaque organe de traitement comporte un deuxième élément d'émission/réception 22.

Comme pour le premier élément d'émission/réception 18, le deuxième élément d'émission/réception 22 est communément désigné sous le terme anglais de « handler ».

De plus, chaque partition 16 comporte un pilote spécifique 24, chaque pilote 24 assurant une liaison sécurisée entre la partition 16 et au moins un organe de traitement 20 auquel la partition 16 est associée.

Il est entendu par l'expression « liaison sécurisée », une liaison de sécurité de type cryptographique.

Dans le cas particulier de la figure 1, chaque liaison sécurisée installée est propre à assurer une communication cryptée entre le premier élément d'émission/réception 18 et un deuxième élément d'émission/réception 22.

Plus précisément, la communication entre le premier élément d'émission/réception 18 et un deuxième élément d'émission/réception 22 est une communication contrôlée et protégée par le chiffre.

Selon l'exemple illustré par la figure 1, la plate-forme principale 12 et au moins une plate-forme secondaire 14 partagent au moins une interface de communication propre à assurer des échanges de données en coupure entre la plate-forme principale 12 et au moins une plate-forme secondaire 14. L'interface de communication n'est pas représentée sur la figure 1.

De préférence, l'interface de communication assure également le noncontournement des données échangées.

La mise en oeuvre des éléments d'émission/réception 18 et 20 en coupure sur les flux d'échange entre la plate-forme principale 12 et une plate-forme secondaire 14 permet l'application de politique de contrôle de flux et de protection par le chiffre des flux entre les partitions 16 et les organes de traitement 20. La mise en oeuvre de la politique de contrôle de flux et de protection par le chiffre permet d'étendre les politiques de cloisonnement entre les partitions 16 et entre les organes de traitement 20 sur l'ensemble des échanges entre la plate-forme principale 12 et la plate-forme secondaire 16.

Le fonctionnement de l'architecture 10 de la figure 1 est maintenant décrit en référence à la figure 2 qui illustre un exemple de mise en oeuvre d'un procédé de gestion de l'architecture 10.

Le procédé comporte une première étape 100 de partitionnement de la plate-forme principale 12.

Lors de la première étape, la plate-forme principale 12 est partitionnée en une pluralité de partitions 16 sous le contrôle d'un hyperviseur.

Le procédé comprend aussi une deuxième étape 102 de partitionnement de la plate-forme secondaire 14.

Lors de la deuxième étape, la plate-forme secondaire 14 est partitionnée en une pluralité d'organes de traitement 20.

Le procédé comporte également une troisième étape 104 d'association.

Lors de la troisième étape, chaque partition de la plate-forme principale 12 est associée à au moins un organe de traitement 20.

Une telle association est mise en oeuvre par installation, pour chaque partition 16 et chaque organe de traitement 20, du pilote spécifique 24 à la partition 16 considérée.

Le pilote 24 assure une liaison sécurisée entre la partition 16 considérée et le ou les organes de traitement 20 auquel la partition 16 est associée.

Selon l'exemple spécifique de l'architecture 10 de la figure 1, chaque liaison sécurisée installée est propre à assurer une communication cryptée entre le premier élément d'émission/réception 18 et le deuxième élément d'émission/réception 22.

De préférence, chaque partition 16 est associée à un ou plusieurs organes de traitement 20, lesdits organes de traitement 20 n'étant pas associés à d'autres partitions 16.

Selon un exemple particulier, chaque partition 16 est associée à un unique organe de traitement 20. Dans un tel cas, dans un mode de réalisation spécifique, certains organes de traitement 20 ne sont associés à aucune partition 16.

Il apparaît ainsi que le procédé de gestion d'une architecture permettant à la fois de garantir l'obtention de la flexibilité offerte par un logiciel et la robustesse offerte par le matériel dans le domaine du cloisonnement.

Plus précisément, l'architecture 10 est une architecture de sécurité par copartitionnement distribué du matériel et du logiciel.

L'architecture 10 proposée présente l'avantage d'être reconfigurable selon les souhaits de l'utilisateur.

Par comparaison, les architectures classiques de l'état de l'art connu réalisent des cloisonnements logiques dont la portée se limite aux capacités du matériel offert par les COTS utilisés. Certains types de traitement et certains niveaux de sensibilité de traitements impliqueront l'externalisation de ces traitements dans des périphériques spécifiques présentant les capacités matérielles adaptées.

Ces architectures sont notamment celles déployées dans les terminaux assurant des traitements cryptographiques en local de la plate-forme (par exemple du stockage sécurisé) ou pour le compte d'applicatif (par exemple du contrôle de transactions). Les architectures multi-niveaux et reconfigurables impliquent également la mise en oeuvre de cloisonnements sur les traitements. Ces architectures de cloisonnement se limitent toutefois au périmètre logiciel s'exécutant sur les processeurs (par exemple GPP) et s'arrêtent aux interfaces externes de ces processeurs. Une telle limitation est renforcée par le caractère reconfigurable des architectures en question. Par ailleurs, la mise en oeuvre de ressources matérielles spécifiques à certains traitements est considérée comme établissant un périphérique (coprocesseur) ne faisant pas de lien avec d'éventuels traitements cloisonnés au niveau de processeur principal.

L'architecture 10 proposée permet donc à la fois de réaliser des zones de confiance bénéficiant de cloisonnements forts basés sur des propriétés matérielles, des zones de confiance logicielles bénéficiant de cloisonnements logiciels s'appuyant sur des propriétés matérielles et de mettre en cohérence les deux niveaux de cloisonnement précédents.

Plus précisément, l'architecture 10 assure une distribution cohérente et homogène entre les cloisonnements des traitements supportés par la plate-forme principale 12 et les traitements assurés par les plates-formes secondaires 14.

Ainsi, il est assuré la cohérence des configurations des mécanismes de communication avec les configurations des mécanismes de cloisonnement pour les traitements exécutés sur la plate-forme principale 12 et les plates-formes secondaires 14. Une distribution cohérente permet d'assurer une sécurisation des échanges les traitements exécutés sur la plate-forme principale 12 et les plates-formes secondaires 14. Cette sécurisation est réalisée par l'interception des flux sortant d'une plate-forme 12, 14 et d'une protection (confidentialité / intégrité / anti-rejeu) par le chiffre en coupure et de bout-en-bout entre une plate-forme principale ou secondaire émettrice vers la plate-forme principale 12 ou secondaire destinataire 14.

Avantageusement, l'architecture 10 permet également l'authentification des pilotes 24 partageant le même niveau de cloisonnement.

En outre, les mécanismes cryptographiques désirés pour la protection sont exécutés dans des zones mémoires spécifiques et cloisonnées. Ce cloisonnement mémoire est obtenu par des mécanismes de cloisonnement physique propres aux circuits de logiques programmable de type FPGA ou ASIC.

Le cloisonnement de la plate-forme principale est quant à lui réalisé via des mécanismes de type MMU ou par un cloisonnement spécifique matériel (adressage mémoire spécifique et filtré) mise en oeuvre par le logiciel s'exécutant sur la plate-forme principale.

Selon un mode de réalisation préféré, le cloisonnement de la plateforme principale peut être renforcé par l'utilisation de mécanisme de type IOMMU.

Il est également interdit tout accès direct entre les traitements inter-plates-formes, c'est-à-dire sans traitement préalable par une protection par le chiffre en coupure. La cohérence entre les cloisonnements et les échanges et renforcé par la cohérence du partage des clés cryptographiques assurant la protection par le chiffre des échanges.

La distribution des clés peut être géré par une plate-forme principale 'système' (Mandatory Access Control) ou laissé à la discrétion des plates-formes principales utilisatrices des traitements des plates-formes secondaires (Discretionary Access Control). La plate-forme principale 12 et les plates-formes secondaires 14 autorisées à communiquer partagent une ou plusieurs clés cryptographiques de protection des échanges. Ces clés sont des clés pré-placées ou négociées entre les plates-formes et respectant la cohérence des configurations. Les clés peuvent également solliciter la plate-forme pour générer aléatoirement des données cryptographiques pour l'établissement des clés de protection. Ces sollicitations peuvent faire appel à des mécanismes de type générateur d'aléas ou PUF (acronyme de l'anglais « Physically Unclonable Function »).

En résumé, l'architecture 10 proposée ainsi que le procédé de gestion permettent une exploitation flexible et distribuée des ressources. De plus, les flux de données échangés via la liaison sécurisée sont protégés, ce qui permet de limiter l'impact du partage des ressources sur la sécurité. En outre, il est permis une portabilité sur différentes architectures matérielles. En particulier, cela résulte en une multiplicité des applications possibles, notamment pour les ordinophones, les tablettes, les miniordinateurs portables ou les serveurs.

## Revendications

1. Procédé de gestion d'une architecture (10), l'architecture (10) comportant :
- une plate-forme principale (12) comportant une pluralité de partitions (16) d'exécution de logiciel, et
- au moins une plate-forme secondaire (14), chaque plate-forme secondaire (14) comprenant une pluralité d'organes de traitement (20), chaque organe de traitement (20) étant propre à mettre en oeuvre des traitements sécurisés pour le compte d'au moins une partition (16) et chaque organe de traitement (20) étant cloisonné physiquement par rapport aux autres organes de traitement (20),
chaque partition (16) comportant un premier élément d'émission/réception (18) et chaque organe de traitement (20) comportant un deuxième élément d'émission/réception (22), chaque liaison sécurisée installée étant propre à assurer une communication cryptée entre un premier élément d'émission/réception (18) et un deuxième élément d'émission/réception (22),
le procédé comportant au moins une étape de :
- association de chaque partition (16) de la plate-forme principale (12) à au moins un organe de traitement (20) par installation, pour chaque partition (16) et chaque organe de traitement (20), d'un pilote (24) spécifique à la partition (16) considérée, le pilote (24) assurant une liaison sécurisée entre la partition (16) considérée et le ou les organes de traitement (20) auquel la partition est associée.

2. Procédé selon la revendication 1, dans lequel la plate-forme principale (12) et l'au moins une plate-forme secondaire (14) partagent au moins une interface de communication propre à assurer des échanges de données en coupure entre la plateforme principale (12) et l'au moins une plate-forme secondaire (14).

3. Procédé selon la revendication 1 ou 2, dans lequel le procédé comporte, en outre, une étape de :
- partitionnement de la plate-forme principale (12) en une pluralité de partitions (16) sous le contrôle d'un hyperviseur.

4. Procédé selon l'une quelconque des revendications 1 à 3, dans lequel le procédé comporte, en outre, une étape de :
- partitionnement de la plate-forme secondaire (14) en une pluralité d'organes de traitement (20).

5. Procédé selon l'une quelconque des revendications 1 à 4, dans lequel chaque partition (16) est associée à un ou plusieurs organes de traitement (20), lesdits organes de traitement (20) n'étant pas associés à d'autres partitions (16).

6. Procédé selon l'une quelconque des revendications 1 à 5, dans lequel la plateforme principale (12) est un microprocesseur programmable.

7. Procédé selon l'une quelconque des revendications 1 à 6, dans lequel la plateforme secondaire (14) est un circuit logique programmable.

8. Architecture (10) comportant :
- une plate-forme principale (12) comportant une pluralité de partitions (16) d'exécution de logiciel, et
- au moins une plate-forme secondaire (14), chaque plate-forme secondaire (14) comprenant une pluralité d'organes de traitement (20), chaque organe de traitement (20) étant propre à mettre en oeuvre des traitements sécurisés pour le compte d'au moins une partition (16) et chaque organe de traitement (20) étant cloisonné physiquement par rapport aux autres organes de traitement (20),
chaque partition (16) comportant un pilote (24) spécifique, chaque pilote (24) assurant une liaison sécurisée entre la partition (16) et au moins un organe de traitement (20) auquel la partition (16) est associée,
chaque partition (16) comportant un premier élément d'émission/réception (18) et chaque organe de traitement (20) comportant un deuxième élément d'émission/réception (22), chaque liaison sécurisée installée étant propre à assurer une communication cryptée entre un premier élément d'émission/réception (18) et un deuxième élément d'émission/réception (22),
des moyens configurés pour associer chaque partition (16) de la plate-forme principale (12) à au moins un organe de traitement (20) par installation, pour chaque partition (16) et chaque organe de traitement (20), d'un pilote (24) spécifique à la partition (16) considérée, le pilote (24) assurant une liaison sécurisée entre la partition (16) considérée et le ou les organes de traitement (20) auquel la partition est associée.

9. Architecture selon la revendication 8, dans laquelle chaque partition (16) est propre à mettre en oeuvre une interface homme-machine permettant à un utilisateur d'accéder à un service.

## Patentansprüche

1. Verwaltungsverfahren einer Architektur (10), wobei die Architektur (10) aufweist:
- eine Hauptplattform (12) mit einer Vielzahl von Partitionen (16) zur Ausführung von Software, und
- mindestens eine Nebenplattform (14), wobei jede Nebenplattform (14) eine Vielzahl von Verarbeitungsorganen (20) umfasst, wobei jedes Verarbeitungsorgan (20) geeignet ist, gesicherte Verarbeitungen für mindestens eine Partition (16) durchzuführen und jedes Verarbeitungsorgan (20) physisch von den anderen Verarbeitungsorganen (20) abgeschottet ist, wobei jede Partition (16) ein erstes Sende-/Empfangselement (18) umfasst und jedes Verarbeitungsorgan (20) ein zweites Sende-/Empfangselement (22) umfasst,
wobei jede installierte gesicherte Verbindung geeignet ist, eine verschlüsselte Kommunikation zwischen einem ersten Sende-/Empfangselement (18) und einem zweiten Sende-/Empfangselement (22) zu gewährleisten,
wobei das Verfahren mindestens einen Schritt aufweist:
- Zuordnen jeder Partition (16) der Hauptplattform (12) zu mindestens einem Verarbeitungsorgan (20) durch Installation, für jede Partition (16) und jedes Verarbeitungsorgan (20), eines Treibers (24), der für die betreffende Partition (16) spezifisch ist, wobei der Treiber (24) eine gesicherte Verbindung zwischen der betreffenden Partition (16) und dem oder den Verarbeitungsorganen (20) gewährleistet, denen die Partition zugeordnet ist.

2. Verfahren nach Anspruch 1, wobei die Hauptplattform (12) und die mindestens eine Nebenplattform (14) mindestens eine Kommunikationsschnittstelle gemeinsam nutzen, die geeignet ist, einen gecutteten Datenaustausch zwischen der Hauptplattform (12) und der mindestens einen Nebenplattform (14) zu gewährleisten.

3. Verfahren nach Anspruch 1 oder 2, wobei das Verfahren ferner einen Schritt umfasst:
- Partitionieren der Hauptplattform (12) in eine Vielzahl von Partitionen (16) unter der Kontrolle eines Hypervisors.

4. Verfahren nach einem der Ansprüche 1 bis 3, wobei das Verfahren ferner einen Schritt aufweist:
- Partitionieren der Nebenplattform (14) in eine Vielzahl von Verarbeitungsorganen (20).

5. Verfahren nach einem der Ansprüche 1 bis 4, wobei jede Partition (16) einem oder mehreren Verarbeitungsorganen (20) zugeordnet ist, wobei die Verarbeitungsorgane (20) keinen anderen Partitionen (16) zugeordnet sind.

6. Verfahren nach einem der Ansprüche 1 bis 5, wobei die Hauptplattform (12) ein programmierbarer Mikroprozessor ist.

7. Verfahren nach einem der Ansprüche 1 bis 6, wobei die Nebenplattform (14) ein programmierbarer logischer Schaltkreis ist.

8. Architektur (10), aufweisend:
- eine Hauptplattform (12) mit einer Vielzahl von Partitionen (16) zur Ausführung von Software, und
- mindestens eine Nebenplattform (14), wobei jede Nebenplattform (14) eine Vielzahl von Verarbeitungsorganen (20) umfasst, wobei jedes Verarbeitungsorgan (20) geeignet ist, gesicherte Verarbeitungen für mindestens eine Partition (16) durchzuführen und jedes Verarbeitungsorgan (20) physisch von den anderen Verarbeitungsorganen (20) abgeschottet ist,
wobei jede Partition (16) einen spezifischen Treiber (24) umfasst, wobei jeder Treiber (24) eine gesicherte Verbindung zwischen der Partition (16) und mindestens einem Verarbeitungsorgan (20), dem die Partition (16) zugeordnet ist, gewährleistet, wobei jede Partition (16) ein erstes Sende-/Empfangselement (18) umfasst und jedes Verarbeitungsorgan (20) ein zweites Sende-/Empfangselement (22) umfasst, wobei jede installierte gesicherte Verbindung geeignet ist, eine verschlüsselte Kommunikation zwischen einem ersten Sende-/Empfangselement (18) und einem zweiten Sende-/Empfangselement (22) zu gewährleisten, Mittel, die ausgelegt sind, um jede Partition (16) der Hauptplattform (12) mindestens einem Verarbeitungsorgan (20) durch Installation, für jede Partition (16) und jedes Verarbeitungsorgan (20), eines Treibers (24) zuzuordnen, der für die betreffende Partition (16) spezifisch ist, wobei der Treiber (24) eine gesicherte Verbindung zwischen der betreffenden Partition (16) und dem oder den Verarbeitungsorganen (20), denen die Partition zugeordnet ist, gewährleistet.

9. Architektur nach Anspruch 8, wobei jede Partition (16) geeignet ist, eine Mensch-Maschine-Schnittstelle zu implementieren, die einem Benutzer den Zugriff auf einen Dienst ermöglicht.

## Claims

1. A method for managing an architecture (10), the architecture (10) including:
- a main platform (12) including a plurality of partitions (16) for executing software, and
- at least one secondary platform (14), each secondary platform (14) comprising a plurality of processing members (20), each processing member (20) being able to apply secured processing operations for the account of at least one partition (16) and each processing member being physically partitioned relatively to the other processing members (20),
each partition (16) including a first transceiver element (18) and each processing member (20) includes a second transceiver element (22), each installed secured link being able to ensure encrypted communication between a first transceiver element (18) and a second transceiver element (22),
the method including at least:
- associating each partition (16) of the main platform (12) with at least one processing member (20) by installing, for each partition (16) and each processing member (20), a driver (24) specific to the relevant partition (16), the driver (24) ensuring a secured link between the relevant partition (16) and the processing member(s) (20) with which the partition is associated.

2. The method according to claim 1, wherein the main platform (12) and said at least one secondary platform (14) at least share a communication interface able to ensure exchange of data in cut-off between the main platform (12) and said at least one secondary platform (14).

3. The method according to claim 1 or 2, wherein the method further includes:
- partitioning of the main platform (12) into a plurality of partitions (16) under the control of a hypervisor.

4. The method according to any one of claims 1 to 3, wherein the method further includes:
- partitioning of the secondary platform (14) into a plurality of processing members (20).

5. The method according to any one of claims 1 to 4, wherein each partition (16) is associated with one or several processing members (20), said processing members (20) not being associated with other partitions (16).

6. The method according to any one of claims 1 to 5, wherein the main platform (12) is a programmable microprocessor.

7. The method according to any one of claims 1 to 6, wherein the secondary platform (14) is a programmable logic circuit.

8. An architecture (10) including:
- a main platform (20) including a plurality of partitions (16) for executing software, and
- at least one secondary platform (14), each secondary platform (14) comprising a plurality of processing members (20), each processing member (20) being able to apply processing operations secured for the account of at least one partition (16) and each processing member (20) being physically partitioned relatively to the other processing members (20),
each partition (16) including a specific driver (24), each driver (24) ensuring the secured link between the partition (16) and at least one processing member (20) with which the partition (16) is associated,
means configured to associate each partition (16) of the main platform (12) with at least one processing member (20) by installing, for each partition (16) and each processing member (20), a driver (24) specific to the relevant partition (16), the driver (24) ensuring a secured link between the relevant partition (16) and the processing member(s) (20) with which the partition is associated

9. The architecture according to claim 8, wherein each partition (16) is able to apply a man-machine interface allowing a user to access a service.
